# FASCICULE DE BREVET EUROPEEN

(11) **EP 4 133 011 B1**
(45) Date de publication et mention de la délivrance du brevet: **29.07.2026**
(21) Numéro de dépôt: 21722967.3
(22) Date de dépôt: 07.04.2021
(51) Int. Cl.: C08L 67/00, C08L 71/00, C08L 75/04, C09D 167/00, C09D 171/00, C09D 175/04, C08L 67/02

(54) **COMPOSITION DE POLYMÈRES POUR FILMS IMPER-RESPIRANTS**
POLYMERZUSAMMENSETZUNG FÜR WASSERFEST-ATMBARE FILME
POLYMER COMPOSITION FOR WATERPROOF-BREATHABLE FILMS

(30) Priorité: 07.04.2020 FR 2003472
(43) Date de publication de la demande: 15.02.2023
(73) Titulaire: ARKEMA FRANCE, 92800 Puteaux (FR)
(72) Inventeur: COCQUET, Clio, 27470 SERQUIGNY (FR)
(74) Mandataire: Arkema Patent
(86) Numéro de dépôt international: PCT/FR2021/050607
(87) Numéro de publication internationale: WO 2021/205118

(56) Documents cités:
- WO-A1-02/12376
- FR-A1- 2 897 356
- FR-A1- 2 992 652
- US-A1- 2002 132 920

## Description

### DOMAINE DE L'INVENTION

La présente invention concerne une composition de polymères ainsi qu'un film imper-respirant obtenu à partir de ladite composition.

### ARRIERE-PLAN TECHNIQUE

Des films imperméables à l'eau liquide et perméables à la vapeur d'eau sont utilisés dans différents domaines tels que le textile, la construction, l'agriculture, le packaging... Ces films peuvent par exemple être utilisés comme emballages pour couvrir des articles ou comme revêtements adhérés sur la surface d'articles.

De manière générale, les films respirants doivent remplir certaines conditions telles qu'un aspect homogène, une résistance au vent, une haute perméabilité à la vapeur d'eau, une certaine élasticité, ainsi qu'une capacité d'adhérer à des différents substrats. De plus, ces films doivent être facilement transformables lors de leur production, notamment par extrusion, sans provoquer des déformations sur le film. Une faible capacité à la transformation se traduit par des imperfections sur les films tels que des trous ou des bords irréguliers.

Il est connu d'utiliser des compositions comprenant des copolymères à blocs polyamide et à blocs polyéther de sorte à former ce type de films. Cependant, malgré une haute perméabilité à la vapeur d'eau, les films formés sont peu étirables ce qui provoque des problèmes lors de leur fabrication par extrusion, notamment par extrusion couchage.

Par ailleurs, l'utilisation de compositions de terpolymères, notamment des terpolymères issues de monomères éthylénique, acrylique et butylénique, permet d'obtenir des films facilement transformables par extrusion. Toutefois, ces films présentent une respirabilité très faible.

Le document US 2004/0029467 concerne un film respirant qui comprend au moins un polymère (a) choisi parmi le groupe comprenant un copolymère d'éthylène/(méth)acrylate d'alkyle (a1), un copolymère d'éthylène/acide (méth)acrylique éventuellement neutralisé (a2), un copolymère d'éthylène/monomère vinylique (a3), le mélange (a1)/(a2), le mélange (a1)/(a3), le mélange (a2)/(a3) et le mélange (a1)/(a2)/(a3), et/ou qui comprend au moins un polyéthylène fonctionnalisé (b); et au moins un copolymère (c) ayant des blocs copolyamide ou des blocs polyester et des blocs polyéther.

Le document US 5614588 concerne un mélange de polymères comprenant un polyéther bloc amide constitué de 30 à 60 % en poids de blocs polyamide-12, polyamide-11 et/ou polyamide-12,12 et 70 à 40 % en poids de blocs de polyéthylène glycol, un polyéther bloc amide constitué de 65 à 85 % en poids de blocs polyamide-12, polyamide-11 et/ou polyamide-12,12 et 35 à 15% en poids de blocs de polyéthylène glycol, et un polymère de poly (éthylène-co-vinylacétate-g-anhydride maléique) constitué de 75 à 95 % en poids d'éthylène, de 5 à 25 % en poids d'acétate de vinyle et de 0,1 à 2 % en poids d'anhydride maléique. La composition de ce document est utilisée pour la fabrication des films perméables à la vapeur d'eau.

Le document US 5506024 concerne des films perméables à la vapeur d'eau fabriqués à partir d'élastomères thermoplastiques à base de polyétheresteramide et de préférence à base de polyéther bloc amide.

Le document US 5800928 concerne des films perméables à la vapeur d'eau comprenant au moins un élastomère thermoplastique comprenant des blocs polyéther et au moins un copolymère comprenant de l'éthylène et au moins un (méth)acrylate d'alkyle. Le document FR 2 992 652 A1 concerne des films imper-respirants utilisés dans le domaine textile. L'exemple comparatif B du tableau 1 décrit une composition comprenant 70% en poids d'un TPU base PEG et 30% en poids d'une polyoléfine fonctionalisée (Lotryl^{®} 20MA08), qui est un copolymère d'éthylène avec de l'acrylate de n-méthyle. La revendication 7 précise que la polyoléfine fonctionnalisée est choisie dans le groupe comprenant les copolymères éthylène-ester acrylique, les copolymères éthylène-ester acryliqueanhydride maléique, les copolymères éthylène-ester acrylique-méthacrylate de glycidyle.

Il existe un besoin de fournir une composition qui permet la fabrication des films présentant à la fois une bonne perméabilité à la vapeur d'eau et une bonne capacité à la transformation lors de leur fabrication.

### DESCRIPTION DE L'INVENTION

L'invention concerne en premier lieu un film obtenu à partir d'une composition consistant en :
- de 75 à 98 % en poids d'au moins un polymère thermoplastique élastomère (nommé ci-après TPE) hydrophile A, choisi parmi (a1) les copolymères à blocs polyesters et blocs polyéthers (COPE), (a2) les copolymères à blocs polyuréthanes et blocs polyéthers ou polyesters (TPU) et/ou leurs mélanges, par rapport au poids de la composition ;
- de 2 à 15 % en poids d'au moins un copolymère B comprenant des motifs issus de l'éthylène, d'un (méth)acrylate d'alkyle et d'un comonomère comportant au moins une fonction acide, anhydride ou époxyde, par rapport au poids de la composition ; et
- de 0 à 10 % en poids d'au moins un additif par rapport au poids de la composition.

Au sens de la présente invention, les copolymères à blocs polyesters et blocs polyéthers (nommé ci-après COPE ou copolyétheresters) sont des copolymères à blocs polyesters et blocs polyéthers. Ils sont constitués de blocs polyéthers souples issus de polyétherdiols et de blocs polyesters rigides qui résultent de la réaction d'au moins un diacide carboxylique avec au moins un motif diol court allongeur de chaîne. Les blocs polyesters et les blocs polyéthers sont reliés par des liaisons esters résultant de la réaction des fonctions acides de l'acide dicarboxylique avec les fonctions OH du polyétherdiol. L'enchaînement des polyéthers et des diacides forme les blocs souples alors que l'enchaînement du glycol ou du butane diol avec les diacides forme les blocs rigides du copolyétherester. Le diol court allongeur de chaîne peut être choisi dans le groupe constitué du neopentylglycol, du cyclohexanediméthanol et des glycols aliphatiques de formule HO(CH₂)ₙOH dans laquelle n'est un entier valant de 2 à 10.

Avantageusement, les diacides sont des acides dicarboxyliques aromatiques ayant de 8 à 14 atomes de carbone. Jusqu'à 50 % en mole de l'acide aromatique dicarboxylique peut être remplacé par au moins un autre acide aromatique dicarboxylique ayant de 8 à 14 atomes de carbone, et/ou jusqu'à 20 % en mole peut être remplacé par un acide aliphatique dicarboxylique ayant de 2 à 14 atomes de carbone.

A titre d'exemple d'acides aromatiques dicarboxyliques, on peut citer l'acide téréphtalique, isophtalique, bibenzoïque, naphtalène dicarboxylique, l'acide 4,4'-diphénylenedicarboxylique, l'acide bis(p-carboxyphényl) méthane, l'éthylène bis p-benzoïque acide, l'acide 1-4 tétraméthylène bis(p-oxybenzoïque), l'acide éthylène bis (p-oxybenzoïque), l'acide 1,3-triméthylène bis (p-oxybenzoique).

A titre d'exemple de glycols, on peut citer l'éthylène glycol, le 1,3-triméthylène glycol, le 1,4-tétraméthylèneglycol, le 1,6-hexaméthylène glycol, le 1,3 propylène glycol, le 1,8 octaméthylèneglycol, le 1,10-décaméthylène glycol et le 1,4-cyclohexylène diméthanol. Les copolymères à blocs polyesters et blocs polyéther sont, par exemple, des copolymères ayant des motifs polyéthers dérivés de polyétherdiols tels que le polyéthylène glycol (PEG), le polypropylène glycol (PPG), le polytriméthylène glycol (PO3G) ou le polytétraméthylène glycol (PTMG), des motifs diacide carboxylique tels que l'acide téréphtalique et des motifs glycol (éthane diol) ou butane diol, 1-4. De tels copolyétheresters sont décrits dans les brevets EP 402 883 et EP 405 227. Ces polyétheresters sont des élastomères thermoplastiques. Ils peuvent contenir des plastifiants. On peut citer par exemple les produits commerciaux sous les noms Arnitel^{®}, commercialisé par DSM ou encore Hytrel^{®}, commercialisé par Dupont.

Au sens de la présente invention, les copolymères à blocs polyuréthanes et blocs polyéthers ou polyesters (nommé ci-après TPU) sont les polyétheruréthanes qui résultent de la condensation de blocs polyéthers souples qui sont des polyétherdiols et de blocs rigides polyuréthanes issus de la réaction d'au moins un diisocyanate pouvant être choisi parmi les diisocyanate aromatiques (ex : MDI, TDI) et les diisocyanates aliphatiques (ex : HDI ou hexaméthylènediisocyanate) avec au moins un diol court. Le diol court allongeur de chaîne peut être choisi parmi les glycols cités plus haut dans la description des copolyétheresters.

Les blocs polyuréthanes et les blocs polyéthers sont reliés par des liaisons résultant de la réaction des fonctions isocyanates avec les fonctions OH du polyétherdiol.

On peut encore citer les polyesteruréthanes qui résultent de la condensation de blocs polyesters souples qui sont des polyesterdiols et de blocs rigides polyuréthanes issus de la réaction d'au moins un diisocyanate avec au moins un diol court. Les polyesterdiols résultent de la condensation de diacides carboxyliques avantageusement choisis parmi les diacides aliphatiques dicarboxyliques ayant de 2 à 14 atomes de carbone et de glycols qui sont des diols courts allongeurs de chaîne choisis parmi les glycols cités plus haut dans la description des copolyétheresters. Ils peuvent contenir des plastifiants.

Selon un mode de réalisation, le TPE hydrophile comprend au moins 10%, de préférence au moins 20%, de préférence au moins 30%, de préférence au moins 40%, de préférence au moins 50%, en poids de polyéthylène glycol (PEG) sur le poids du TPE.

Selon certains modes de réalisation, le (méth)acrylate d'alkyle comporte un groupement alkyle comprenant de 1 à 24 atomes de carbone, et de préférence de 1 à 5 atomes de carbone.

Selon certains modes de réalisation, le (méth)acrylate d'alkyle est choisi parmi le (méth)acrylate de méthyle, le (méth)acrylate d'éthyle et le (méth)acrylate de butyle ainsi que leurs combinaisons.

Selon certains modes de réalisation, la teneur molaire en motifs issus de (méth)acrylate d'alkyle dans le copolymère B est de 5 à 35 %.

Selon certains modes de réalisation, la teneur molaire en comonomère comportant au moins une fonction acide, anhydride ou époxyde dans le copolymère B est de 0,1 à 15 %.

Selon certains modes de réalisation, le comonomère comportant au moins une fonction acide, anhydride ou époxyde est choisi parmi les anhydrides d'acides carboxyliques insaturés, et de préférence est l'anhydride maléique.

Selon certains modes de réalisation, le comonomère comportant au moins une fonction acide, anhydride ou époxyde a une fonction de type époxyde insaturé, et de préférence est le méthacrylate de glycidyle.

Selon certains modes de réalisation, le copolymère B est dépourvu de motifs issus de l'acétate de vinyle.

Selon certains modes de réalisation, l'additif est choisi parmi les colorants inertes tels que le dioxyde de titane, les charges, les tensioactifs, les agents de réticulation, les agents de nucléation, les composés réactifs, les agents minéraux ou organiques ignifuges, les agents absorbants de lumière ultraviolette (UV) ou infrarouge (IR), les agents fluorescents UV ou IR, ainsi que leurs combinaisons.

L'invention concerne également un procédé de fabrication d'un film à partir de la composition décrite ci-dessus.

Le film selon l'invention peut être préparé par toute méthode, qui rend possible l'obtention d'un mélange intime ou homogène contenant ledit TPE hydrophile et un copolymère B selon l'invention, et éventuellement un(des) additif(s), telle que le compoundage à l'état fondu, l'extrusion, le compactage, ou encore le malaxeur à rouleau.

Selon un mode de réalisation, le TPE et le copolymère B sous forme des granulés peuvent être préalablement mélangés à sec (« dry-blend ») avant la transformation en film.

On utilise avantageusement les dispositifs habituels de mélange et de malaxage de l'industrie des thermoplastiques tels que les extrudeuses, les extrudeuses de type bi-vis, notamment les extrudeuses bi-vis co-rotatives engrenantes auto-nettoyantes, et les malaxeurs, par exemple les comalaxeurs de marque BUSS ou les mélangeurs internes.

Selon un mode de réalisation préférentiel, le procédé de fabrication du film est un procédé d'extrusion. Selon certains modes de réalisation, l'extrusion est effectuée à une température de 100 à 300°C, de préférence de 150 à 280°C.

Le procédé comprend généralement une étape de l'étirement de la composition. L'étape d'étirement peut être effectuée par extrusion soufflage. Selon un mode de réalisation, l'étape d'étirement est effectuée par extrusion couchage.

Selon un mode de réalisation, l'étape d'étirement est effectuée par extrusion à plat.

L'invention concerne également un film obtenu par les procédés décrits ci-dessus.

La présente invention permet de surmonter les inconvénients de l'état de la technique. Elle fournit plus particulièrement une composition qui permet la fabrication de films présentant à la fois une bonne perméabilité à la vapeur d'eau et une bonne aptitude à la transformation lors de leur fabrication.

Cela est accompli grâce à une composition consistant en au moins un polymère A tel que décrit ci-dessus et en au moins un copolymère B comprenant des motifs issus d'au moins trois comonomères : un premier comonomère éthylène, un deuxième comonomère (méth)acrylate d'alkyle et un troisième comonomère comportant au moins une fonction réactive sous forme d'un groupe acide, anhydride ou époxyde ; et optionnellement un ou plusieurs additifs.

Plus particulièrement, cette composition consistant en de 75 à 98 % en poids de polymère A, de 2 à 15 % en poids de copolymère B et de 0 à 10 % d'au moins un additif, permet d'obtenir des films ayant une bonne perméabilité à la vapeur d'eau et une très bonne aptitude à la transformation, notamment par extrusion, et en particulier par extrusion à chaud.

L'invention est maintenant décrite plus en détail et de façon non limitative dans la description qui suit.

### Composition

La composition constituante du film selon l'invention consiste en :
- au moins un polymère A choisi parmi (a1) les copolymères à blocs polyesters et blocs polyéthers et (a2) les copolymères à blocs polyuréthanes et blocs polyéthers ou polyesters ;
- au moins un copolymère B comprenant des motifs issus d'au moins trois comonomères : un premier comonomère éthylène, un deuxième comonomère (méth)acrylate d'alkyle et un troisième comonomère comprenant au moins une fonction réactive sous forme d'un groupe acide, anhydride ou époxyde ; et
- optionnellement au moins un additif.

Le polymère A est présent dans la composition à une teneur de 75 à 98 %, et de préférence de 75 à 95 % en poids par rapport au poids de la composition. Par exemple, le polymère A peut être présent dans la composition à une teneur de 75 à 78 % ; ou de 78 à 80 % ; ou de 80 à 82 % ; ou de 82 à 84 % ; ou de 84 à 86 % ; ou de 86 à 88 % ; ou de 88 à 90 % ; ou de 90 à 92 % ; ou de 92 à 94 % ; ou de 94 à 96 % ; ou de 96 à 98 % en poids par rapport au poids de la composition.

Concernant le copolymère B comprenant des motifs issus d'au moins trois comonomères, il est présent à une teneur de 2 à 15 %, et de préférence de 5 à 15 % en poids par rapport au poids de la composition. Par exemple, ce copolymère B peut être présent dans la composition à une teneur de 2 à 3 % ; ou de 3 à 4 % ; ou de 4 à 5 % ; ou de 5 à 6 % ; ou de 6 à 7 % ; ou de 7 à 8 % ; ou de 8 à 9 % ; ou de 9 à 10 % ; ou de 10 à 11 % ; ou de 11 à 12 % ; ou de 12 à 13 % ; ou de 13 à 14 % ; ou de 14 à 15 % en poids par rapport au poids de la composition.

Le premier comonomère à partir duquel ce copolymère B est fabriqué est l'éthylène. Les motifs issus de l'éthylène peuvent avoir une teneur molaire dans le copolymère B de 50 à 94,9 %, et de préférence de 58 à 79 %. Cette teneur molaire peut notamment être de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 94,9 %.

Le deuxième comonomère à partir duquel ce copolymère B est fabriqué est un (méth)acrylate d'alkyle. Par « *(méth)acrylate d'alkyle* » on entend les acrylates d'alkyles et les méthacrylates d'alkyles. De préférence, le groupement alkyle du (méth)acrylate d'alkyle comprend de 1 à 24 atomes de carbone, et de préférence de 1 à 5 atomes de carbone. Il peut par exemple comprendre de 1 à 2 ; ou de 2 à 4 ; ou de 4 à 6 ; ou de 6 à 8 ; ou de 8 à 10 ; ou de 10 à 12 ; ou de 12 à 14 ; ou de 14 à 16 ; ou de 16 à 18 ; ou de 18 à 20 ; ou de 20 à 22 ; ou de 22 à 24 atomes de carbones.

Selon certains modes de réalisation préférés, le deuxième comonomère est choisi parmi le (méth)acrylate de méthyle, le (méth)acrylate d'éthyle, le (méth)acrylate de butyle, le (méth)acrylate d'isobutyle, le (méth)acrylate de 2-éthymhéxyl ainsi que leurs combinaisons. De préférence, le deuxième comonomère est choisi parmi le (méth)acrylate de méthyle, le (méth)acrylate d'éthyle et le (méth)acrylate de butyle.

Selon certains modes de réalisation, un seul deuxième comonomère de type (méth)acrylate d'alkyle est utilisé pour la fabrication du copolymère B.

Selon d'autres modes de réalisation, le copolymère B peut être fabriqué à partir de plus d'un deuxième comonomère de type (méth)acrylate d'alkyle par exemple deux ou trois deuxièmes comonomères. Par exemple, le copolymère B peut être fabriqué à partir de (méth)acrylate d'éthyle et/ou de (méth)acrylate de méthyle et/ou de (méth)acrylate de butyle.

Les motifs issus du deuxième comonomère (ou des deuxièmes comonomères) peuvent avoir une teneur molaire dans le copolymère B de 5 à 35 %, et de préférence de 20 à 30 %. Cette teneur molaire peut notamment être de 5 à 10 % ; ou de 10 à 15 % ; ou de 15 à 20 % ; ou de 20 à 25 % ; ou de 25 à 30 % ; ou de 30 à 35 %.

Le troisième comonomère comporte au moins une fonction réactive sous forme d'un groupe acide, anhydride ou époxyde.

Selon certains modes de réalisation, le troisième comonomère est choisi parmi les acides carboxyliques ou leurs dérivés anhydrides d'acides carboxyliques insaturés, et de préférence parmi les acides dicarboxyliques ou leurs dérivés anhydrides d'acides dicarboxyliques insaturés.

Des exemples d'anhydrides d'acides dicarboxyliques insaturés sont notamment l'anhydride maléique, l'anhydride itaconique, l'anhydride citraconique, l'anhydride tétrahydrophtalique. De préférence, l'anhydride maléique est utilisé.

Des monomères acides mono ou dicarboxyliques insaturés tels que l'acide (méth)acrylique peuvent aussi être utilisés.

Alternativement, le troisième comonomère peut comprendre une fonction du type époxyde insaturé.

Des exemples sont notamment :
- les esters et éthers de glycidyle aliphatiques tels que l'allylglycidyléther, le vinylglycidyléther, le maléate et l'itaconate de glycidyle, l'acrylate et le méthacrylate de glycidyle (GMA) et
- les esters et éthers de glycidyle alicycliques tels que le 2-cyclohexène-1-glycidylethér, le cyclohexène-4,5-diglycidylcarboxylate, le cyclohexène-4-glycidyl carboxylate, le 5-norbornène-2-méthyl-2-glycidyl carboxylate et l'endocis-bicyclo(2,2,1)-5-heptène-2,3-diglycidyl dicarboxylate.

Les motifs issus du troisième comonomère peuvent être présents dans le copolymère B dans une teneur molaire de 0,1 à 15 %, et de préférence de 1 à 12 %. Cette teneur molaire peut notamment être de 0,1 à 1 % ; ou de 1 à 3 % ; ou de 3 à 5 % ; ou de 5 à 7 % ; ou de 7 à 9 % ; ou de 9 à 11 % ; ou de 11 à 13 % ; ou de 13 à 15 %.

Selon certains modes de réalisation, un seul troisième comonomère de type (méth)acrylate d'alkyle est utilisé pour fabriquer le copolymère B.

Selon d'autres modes de réalisation, le copolymère B peut comprendre des motifs issus de plus d'un troisième comonomère par exemple deux ou trois troisièmes comonomères. Par exemple, la composition constituante du film selon l'invention peut comprendre des motifs issus de l'anhydride maléique et du méthacrylate de glycidyle.

Dans un tel cas, les teneurs en motifs issus du troisième comonomère sont données par rapport au total des différents troisièmes comonomères.

De préférence, le copolymère B ne comprend pas de motifs issus d'autres comonomères que le premier, deuxième et troisième comonomères décrits ci-dessus.

De préférence, le copolymère B est un terpolymère, c'est-à-dire qu'il comporte des motifs issus de trois comonomères seulement.

Des exemples de copolymère B préféré sont : les terpolymères issus d'éthylène, d'acrylate de méthyle et d'anhydride maléique ; les terpolymères issus d'éthylène, d'acrylate d'éthyle et d'anhydride maléique ; les terpolymères issus d'éthylène, d'acrylate de butyle et d'anhydride maléique ; les terpolymères issus d'éthylène, d'acrylate de méthyle et de méthacrylate de glycidyle ; les terpolymères issus d'éthylène, d'acrylate d'éthyle et de méthacrylate de glycidyle ; les terpolymères issus d'éthylène, d'acrylate de butyle et de méthacrylate de glycidyle.

Le copolymère B est de préférence fabriqué par copolymérisation des différents comonomères, notamment de type radicalaire haute pression. Par exemple, le deuxième et le troisième comonomère peuvent être copolymérisés directement avec l'éthylène, notamment par polymérisation radicalaire haute pression.

Selon certains modes de réalisation préférés, la composition constituante du film selon l'invention, et plus particulièrement le copolymère B est dépourvu de motifs issus de l'acétate de vinyle. En effet, ce monomère peut avoir des propriétés toxiques. De plus, il n'est pas adapté à une extrusion à chaud, ce qui rend la formation du film à partir d'une composition comprenant des motifs issus de ce monomère difficile voire impossible.

Concernant les additifs, ceux-ci sont optionnellement présents à une teneur pondérale de 0 à 10 % et de préférence de 0 à 5 %. Par exemple, un ou plusieurs additifs peuvent être présents à une teneur pondérale de 0 à 0,5 % ; ou de 0,5 à 1 % ; ou de 1 à 2 % ; ou de 2 à 3 % ; ou de 3 à 4 % ; ou de 4 à 5 % ; ou de 5 à 6 % ; ou de 6 à 7 % ; ou de 7 à 8 % ; ou de 8 à 9 % ; ou de 9 à 10 %.

Ces additifs peuvent comprendre, par exemple, des colorants inertes tels que le dioxyde de titane, des charges, des tensioactifs, des agents de réticulation, des agents de nucléation, des composés réactifs, des agents minéraux ou organiques ignifuges, des agents absorbants de lumière ultraviolette (UV) ou infrarouge (IR) et des agents fluorescents UV ou IR. Les charges typiques comprennent le talc, le carbonate de calcium, l'argile, la silice, le mica, la wollastonite, le feldspath, le silicate d'aluminium, l'alumine, l'alumine hydratée, les microsphères de verre, les microsphères de céramique, les microsphères thermoplastiques, la baryte et la farine de bois. Ces additifs permettent de modifier une ou plusieurs propriétés physiques de la composition.

### Film

L'invention concerne également un film obtenu à partir de la composition décrite ci-dessus.

Ce film peut être de préférence fabriqué par extrusion. De préférence l'extrusion est effectuée à chaud à une température allant de 100 à 300°C, et de préférence de 150 à 300°C, par exemple de 180 à 280°C.

Selon certains modes de réalisation, le film est fabriqué par extrusion couchage de la composition constituante du film selon l'invention sur un substrat. Dans ce cas, la température d'extrusion peut être par exemple de 250 à 300°C. Le substrat
peut être choisi parmi l'aluminium, le papier ou carton, la cellophane, les films à base de résines polyéthylène, polypropylène, polyamide, polyester, chlorure de polyvinyle (PVC), chlorure de polyvinylidène (PVDC), polyacrylonitryle (PAN), ces films étant orientés ou non, métallisées ou non, traités ou non par voie physique ou chimique, les films revêtus d'une fine couche barrière inorganique tels que le polyester (PET SiOx ou AlOx) et les tissus tissés ou non-tissés. Lorsque le film n'est pas un tissu tissé ou un nontissé, il est de préférence perforé, notamment micro-perforé.

Selon d'autres modes de réalisation, le film peut être fabriqué par extrusion de film à plat (« *extrusion cast* ») de la composition constituante du film selon l'invention. Dans ce cas, la température d'extrusion peut être par exemple de 180 à 230°C.

Le film selon l'invention est un film imper-respirant. Par « *imper-respirant* », on entend perméable à la vapeur d'eau et imperméable à l'eau liquide.

Le film selon l'invention peut avoir une épaisseur de 2 à 100 µm et de préférence de 10 à 50 µm.

Selon un mode de réalisation, le film imper respirant a une épaisseur inférieure ou égale à 50 mm, de préférence inférieure ou égale à 40 mm, à 30 mm, ou à 25 mm, de préférence compris entre 5 à 25 mm.

Une épaisseur telle que décrite ci-dessus permet de procurer une bonne propriété en perméabilité à la vapeur d'eau.

De préférence, le film selon l'invention présente une perméabilité à la vapeur d'eau (MVTR, pour « *Moisture Vapour Transmission Rate* ») d'au moins 700 g/m² par 24 heures, à 23°C, à un taux d'humidité relative de 50 %, pour une épaisseur de film de 30 µm. De manière plus préférée, la perméabilité à la vapeur d'eau MVTR du film vaut au moins 800 g/m²/24 h, à 23°C, à un taux d'humidité relative de 50 %, pour une épaisseur de film de 30 µm. En particulier, la perméabilité MVTR de la membrane peut valoir de 700 à 800 g/m²/24 h, ou de 800 à 900 g/m²/24 h, ou de 900 à 1000 g/m²/24 h, ou de 1000 à 1200 g/m²/24 h, ou 1200 à 1500 g/m²/24 h, ou de 1500 à 2000 g/m²/24 h, ou de 2000 à 2500 g/m²/24 h, ou de 2500 à 3000 g/m²/24 h, ou de 3000 à 3500 g/m²/24 h, ou de 3500 à 4000 g/m²/24 h, ou de 4000 à 4500 g/m²/24 h, ou de 4500 à 5000 g/m²/24 h, à 23°C, à un taux d'humidité relative de 50 %, pour une épaisseur de film de 30 µm. La perméabilité à la vapeur d'eau (MVTR) du film, à 23°C, pour un taux d'humidité relative de 50 %, pour une épaisseur de film de 30 µm, peut être mesurée selon la norme ASTM E96A.

L'invention concerne également l'utilisation d'un film tel que décrit dans la présente invention dans le domaine médical, l'hygiène, la bagagerie, la confection, l'habillement, l'équipement ménager ou de la maison, l'ameublement, les moquettes, l'automobile, l'industrie, notamment la filtration industrielle, l'agriculture et/ou le bâtiment.

L'invention a également pour objet un produit stratifié (ci-après stratifié) comprenant au moins un matériau et au moins un film imper respirant selon l'invention, le matériau pouvant par exemple être choisi parmi le textile, un matériau de construction, les emballages ou les revêtements.

Selon un mode de réalisation particulier, le matériau est un matériau textile, et ledit film adhérent sur au moins une surface du matériau textile avec une force de pelage comprise dans la gamme de 0,5 à 50 N, de préférence de 0,5 à 10 N.

Avantageusement, le film selon l'invention est notamment appliqué sur un matériau textile par tout procédé connu, de préférence sans utiliser de colle entre le film et le textile.

On peut citer à titre d'exemple l'extrusion couchage d'un film de la composition sur le textile, ou le pressage à chaud (thermo-lamination ou lamination avec une colle) du film sur un textile ou entre deux textiles, à une température suffisante pour que le film s'imprègne et emprisonne les fibres du textile.

Selon un mode de réalisation alternatif ou combiné au(x) précédent(s), on peut également citer le collage à l'aide d'un joint de colle, de préférence un joint de colle aqueux, c'est-à-dire comprenant moins de 5% en poids de solvant sur la composition de joint de colle.

De préférence, le film présente une épaisseur comprise entre 5 et 50 mm, et de préférence entre environ 5 et 10 mm. Avantageusement, dans le cadre d'une application par extrusion-couchage, on dépose de 10 à 50 g/m2 de film thermoplastique sur le textile.

Dans la présente description de l'invention, on entend :
- Par « matériau textile » ou « textile », tout matériau réalisé à partir de fibres ou de filaments ainsi que tout matériau, y-compris le papier et le carton, formant une membrane poreuse caractérisée par un rapport longueur/épaisseur d'au moins 300 ;
- Par « fibre », toute matière synthétique ou naturelle, caractérisée par un rapport longueur/diamètre d'au moins 300 ;
- Par « filament », toute fibre de longueur infinie.

Parmi les textiles, on trouve notamment des mats de fibres (les pansements, les filtres, le feutre), des mèches (pansements) des fils (à coudre, à tricoter, à tisser), des tricots (rectiligne, circulaire, fullyfashioned) des tissus (traditionnel, Jacquard, multiple, double face, multi axial, 2D et demi, 3D), et bien d'autres.

Selon un mode de réalisation préféré de l'invention, ledit au moins un matériau textile se présente sous la forme d'une membrane poreuse, d'un textile tissé ou d'un textile non tissé.

Avantageusement, ledit au moins un matériau textile comprend des fibres synthétiques, notamment des fibres synthétiques obtenues à partir de matières premières bio-ressourcées, des fibres naturelles, des fibres artificielles fabriquées à partir de matières premières naturelles, des fibres minérales, et/ou des fibres métalliques.

Avantageusement, ledit textile comprend des fibres synthétiques obtenues à partir de matières premières bioressourcées, telles que des fibres de polyamide, notamment de polyamide 11. Avantageusement, ledit textile comprend en outre des fibres naturelles, telles que du coton, de la laine et/ou de la soie, des fibres artificielles fabriquées à partir de matières premières naturelles, des fibres minérales, telles que des fibres de carbone, de verre, de silice et/ou de magnésium.

Le textile est notamment choisi parmi des étoffes ou des surfaces textiles, telles que des surfaces tissées, tricotées, non-tissées ou tapis. Ces articles peuvent être par exemple des moquettes, des tapis, des revêtements d'ameublement, des revêtements de surface, les canapés, des rideaux, de la literie, des matelas et oreillers, des vêtements et des matériaux textiles médicaux.

Le textile selon l'invention constitue avantageusement un feutre, un filtre, un film, une gaze, une toile, un pansement, une couche, un tissu, un tricot, un article d'habillement, un vêtement, un article de literie, un article d'ameublement, un rideau, un revêtement d'habitacle, un textile technique fonctionnel, un géotextile et/ou un agrotextile.

### EXEMPLE

L'exemple suivant illustre l'invention sans la limiter.

Des films ont été préparés à partir de différentes compositions (A à G) selon les deux manières suivantes afin d'évaluer la perméabilité à la vapeur d'eau et la limite de la stabilité (aptitude à la transformation) des films.

Pour l'évaluation de la perméabilité à la vapeur d'eau :
Les films ont été préparés à partir des différentes compositions (A à G) par un procédé d'extrusion de film à plat (« *extrusion cast* ») à l'aide d'une extrudeuse ayant les paramètres suivants :
- diamètre de vis : 30 mm ;
- rapport L/D : 25
- profil : vis-barrière ;
- filière : en T, de laize 250 µm et d'entrefer 300 µm.

Les températures d'extrusion étaient comprises entre 180°C et 230°C et adaptées selon le grade du copolymère.

La perméabilité à la vapeur d'eau MVTR a été mesurée à 23°C, à un taux d'humidité relative de 50 %, selon la norme ASTM E96A.

Les films obtenus ont une épaisseur de 50 µm.

Pour l'évaluation de l'aptitude à la transformation :
Les films ont été préparés à partir des différentes compositions (A à G) par extrusion couchage sur un support aluminium (37µm) / polymère à l'aide d'une ligne d'extrusion-couchage COLLIN ayant les paramètres suivants :
- air gap : 70 mm ;
- vitesse de vis :80 tr/min ;
- entrefer de filière : 300 µm.

La température d'extrusion était de 280°C.

Les films ont une épaisseur initiale de 50 µm (qui diminue lorsqu'on augmente la vitesse de ligne).

Ainsi, pour évaluer la limite de la stabilité du film, la vitesse de ligne a été augmentée progressivement à partir de 5 m/min jusqu'à l'observation d'une instabilité. Cette instabilité peut être la rupture du film, un ou plusieurs trous formés sur le film ou une instabilité de la largeur du film. Ces observations ont été réalisées trois fois, afin de confirmer les résultats et une valeur moyenne a été retenue.

La limite de stabilité du film correspond à la vitesse à partir de laquelle les instabilités apparaissent.

Dans les deux cas :
Les terpolymères (polymères comprenant des motifs issus d'au moins trois comonomères) utilisés sont les suivants :

**[Tableau 1]**

| Terpolymère | 1^{er} monomère | 2^{ème} monomère (teneur molaire) | 3^{ème} monomère (teneur molaire) |
|---|---|---|---|
| Terpo1 | Ethylène | Acrylate d'éthyle (29 %) | Anhydride maléique (1,3 %) |
| Terpo2 | Ethylène | Acrylate de butyle (25 %) | Méthacrylate de glycidyle (8 %) |
| Terpo3 | Ethylène | Acrylate de butyle (25 %) | Méthacrylate de glycidyle (5 %) |

Les copolymères utilisés à titre comparatif sont les suivants :

**[Tableau 2]**

| Copolymère | 1^{er} monomère | 2^{ème} monomère (teneur molaire) |
|---|---|---|
| Copo1 | Ethylène | Acrylate d'méthyle (25 %) |
| Copo2 | Ethylène | Acrylate de méthyle (30 %) |

Les caractéristiques des compositions A à G sont données dans le tableau suivant :

**[Tableau 3]**

| **Compositions** | **Polymère TPE (%)** | **Terpolymère ou Copolymère (%)** |
|---|---|---|
| A(invention) | 90 % | Terpo1 (10 %) |
| B(invention) | 90 % | Terpo2 (10 %) |
| C(invention) | 90 % | Terpo3 (10 %) |
| D(comparatif) | 80 % | Terpo1 (20 %) |
| E(comparatif) | 90 % | Copo1 (10 %) |
| F(comparatif) | 90 % | Copo2 (10 %) |
| G(comparatif) | 100 % | - |
| H(invention) | 90% | Terpo 1 10% |
| I(comparatif) | 100% | - |

Le polymère TPE utilisé dans les exemples (A à G) est un produit commercial COPE sous la marque Arnitel^{®} VT 3108 commercialisé par DSM. Le polymère TPE utilisé dans les exemples H et I est un produit commercial polyéther polyuréthane aromatique sous la marque Dureflex^{®} commercialisé par Covestro.

Les compositions A à C, et H sont selon l'invention et les compositions D à G correspondent à des exemples comparatifs (la composition D comprend un copolymère B selon l'invention mais avec une teneur supérieure à celle revendiquée et la composition G comprend uniquement du copolymère Arnitel).

Les résultats de perméabilité à la vapeur d'eau ainsi que de limite de la stabilité des films (A à G) obtenus par les compositions A à sont présentés ci-dessous :

**[Tableau 4]**

| Films | Limite de stabilité (m/min) | Perméabilité à la vapeur d'eau |
|---|---|---|
| A (invention) | 35 | 325 |
| B (invention) | 41 | 330 |
| C (invention) | 38 | 322 |
| D (comparatif) | 50 | 245 |
| E (comparatif) | 22 | 320 |
| F (comparatif) | 23 | 315 |
| G (comparatif) | 17 | 360 |
| H (invention) | 40 | 300 |
| I (comparatif) | 25 | 310 |

On constate que les films selon l'invention (A à C, H) présentent à la fois une perméabilité élevée à la vapeur d'eau et une bonne aptitude à la transformation (limite de stabilité du film).

## Revendications

1. Film obtenu à partir de la composition consistant en :
- de 75 à 98 % en poids d'au moins un polymère thermoplastique élastomère (TPE) hydrophile A, choisi parmi (a1) les copolymères à blocs polyesters et blocs polyéthers, (a2) les copolymères à blocs polyuréthanes et blocs polyéthers ou polyesters et/ou leurs mélanges, par rapport au poids de la composition ;
- de 2 à 15 % en poids d'au moins un copolymère B comprenant des motifs issus de l'éthylène, d'un (méth)acrylate d'alkyle et d'un comonomère comportant au moins une fonction acide, anhydride ou époxyde, par rapport au poids de la composition ; et
- de 0 à 10 % en poids d'au moins un additif par rapport au poids de la composition.

2. Film selon la revendication 1, dans lequel le (méth)acrylate d'alkyle comporte un groupement alkyle comprenant de 1 à 24 atomes de carbone, et de préférence de 1 à 5 atomes de carbone.

3. Film selon l'une des revendications 1 à 2, dans lequel le (méth)acrylate d'alkyle est choisi parmi le (méth)acrylate de méthyle, le (méth)acrylate d'éthyle et le (méth)acrylate de butyle ainsi que leurs combinaisons.

4. Film selon l'une des revendications 1 à 3, dans lequel la teneur molaire en motifs issus de (méth)acrylate d'alkyle dans le copolymère B est de 5 à 35 %.

5. Film selon l'une des revendications 1 à 4, dans lequel la teneur molaire en comonomère comportant au moins une fonction acide, anhydride ou époxyde dans le copolymère B est de 0,1 à 15 %.

6. Film selon l'une des revendications 1 à 5, dans lequel le comonomère comportant au moins une fonction acide, anhydride ou époxyde est choisi parmi les anhydrides d'acides carboxyliques insaturés, et de préférence est l'anhydride maléique.

7. Film selon l'une des revendications 1 à 5, dans lequel le comonomère comportant au moins une fonction acide, anhydride ou époxyde a une fonction de type époxyde insaturé, et de préférence est le méthacrylate de glycidyle.

8. Film selon l'une des revendications 1 à 7, dans lequel le copolymère B est dépourvu de motifs issus de l'acétate de vinyle.

9. Film selon l'une des revendications 1 à 8, dans lequel l'additif est choisi parmi les colorants inertes tels que le dioxyde de titane, les charges, les tensioactifs, les agents de réticulation, les agents de nucléation, les composés réactifs, les agents minéraux ou organiques ignifuges, les agents absorbants de lumière ultraviolette (UV) ou infrarouge (IR), les agents fluorescents UV ou IR, ainsi que leurs combinaisons.

10. Procédé de fabrication d'un film, de préférence d'un film imper-respirant, comprenant l'extrusion de la composition selon l'une des revendications 1 à 9.

11. Procédé selon la revendication 10, dans lequel l'extrusion est effectuée à une température de 100 à 300°C.

12. Procédé selon l'une des revendications 10 ou 11, dans lequel l'extrusion est une extrusion couchage ou une extrusion à plat.

13. Film obtenu par le procédé selon l'une des revendications 10 à 12.

14. Film selon la revendication 13 ayant une épaisseur de 2 à 100 µm et de préférence de 10 à 50 µm.

15. Utilisation d'un film selon la revendication 14 dans le domaine médical, l'hygiène, la bagagerie, la confection, l'habillement, l'équipement ménager ou de la maison, l'ameublement, les moquettes, l'automobile, l'industrie, notamment la filtration industrielle, l'agriculture et/ou le bâtiment.

## Patentansprüche

1. Folie, die aus der Zusammensetzung erhalten wird, die aus Folgendem besteht:
- 75 bis 98 Gew.-% mindestens eines hydrophilen thermoplastischen elastomeren (TPE) Polymers A, das aus (a1) Copolymeren mit Polyesterblöcken und Polyetherblöcken, (a2) Copolymeren mit Polyurethanblöcken und Polyether- oder Polyester-Blöcken und/oder Mischungen davon ausgewählt ist, bezogen auf das Gewicht der Zusammensetzung;
- 2 bis 15 Gew.-% mindestens eines Copolymers B, das Einheiten umfasst, die von Ethylen, einem Alkyl(meth)acrylat und einem mindestens eine Säure-, Anhydrid- oder Epoxid-Funktion aufweisenden Comonomer stammen, bezogen auf das Gewicht der Zusammensetzung; und
- 0 bis 10 Gew.-% mindestens eines Additivs, bezogen auf das Gewicht der Zusammensetzung.

2. Folie nach Anspruch 1, wobei das Alkyl(meth)acrylat eine Alkylgruppe aufweist, die 1 bis 24 Kohlenstoffatome und vorzugsweise 1 bis 5 Kohlenstoffatome umfasst.

3. Folie nach einem der Ansprüche 1 bis 2, wobei das Alkyl(meth)acrylat aus Methyl(meth)acrylat, Ethyl(meth)acrylat und Butyl(meth)acrylat sowie Kombinationen davon ausgewählt ist.

4. Folie nach einem der Ansprüche 1 bis 3, wobei der Stoffmengengehalt an von einem Alkyl(meth)acrylat stammenden Einheiten im Copolymer B von 5 bis 35 % beträgt.

5. Folie nach einem der Ansprüche 1 bis 4, wobei der Stoffmengengehalt des mindestens eine Säure-, Anhydrid- oder Epoxid-Funktion aufweisenden Comonomers im Copolymer B von 0,1 bis 15 % beträgt.

6. Folie nach einem der Ansprüche 1 bis 5, wobei das mindestens eine Säure-, Anhydrid- oder Epoxid-Funktion aufweisende Comonomer aus Anhydriden von ungesättigten Carbonsäuren ausgewählt ist und vorzugsweise Maleinsäureanhydrid ist.

7. Folie nach einem der Ansprüche 1 bis 5, wobei das mindestens eine Säure-, Anhydrid- oder Epoxid-Funktion aufweisende Comonomer eine Funktion vom Typ eines ungesättigten Epoxids aufweist und vorzugsweise Glycidylmethacrylat ist.

8. Folie nach einem der Ansprüche 1 bis 7, wobei das Copolymer B frei von Einheiten ist, die von Vinylacetat stammenden.

9. Folie nach einem der Ansprüche 1 bis 8, wobei das Additiv aus inerten Farbstoffen, wie Titandioxid, Füllstoffen, Tensiden, Vernetzungsmitteln, Keimbildungsmitteln, reaktiven Verbindungen, anorganischen oder organischen Flammschutzmitteln, Ultraviolett- (UV-) oder Infrarot- (IR-)Absorptionsmitteln, UV- oder IR-Leuchtstoffen sowie Kombinationen davon ausgewählt ist.

10. Verfahren zur Herstellung einer Folie, vorzugsweise einer atmungsaktiven Folie, das die Extrusion der Zusammensetzung nach einem der Ansprüche 1 bis 9 umfasst.

11. Verfahren nach Anspruch 10, wobei die Extrusion bei einer Temperatur von 100 bis 300 °C erfolgt.

12. Verfahren nach einem der Ansprüche 10 oder 11, wobei es sich bei der Extrusion um eine Extrusionsbeschichtung oder ein Flachspritzen handelt.

13. Folie, die durch das Verfahren nach einem der Ansprüche 10 bis 12 erhalten wird.

14. Folie nach Anspruch 13 mit einer Dicke von 2 bis 100 µm und vorzugsweise von 10 bis 50 µm.

15. Verwendung einer Folie nach Anspruch 14 im medizinischen Bereich, in der Hygiene, bei Gepäck, bei der Herstellung, der Bekleidung, bei Haushaltsgeräten oder bei der Hausausstattung, für Möbel, Teppichboden, bei Kraftfahrzeugen, in der Industrie, insbesondere der industriellen Filtration, der Landwirtschaft und/oder bei Gebäuden.

## Claims

1. Film obtained using the composition consisting of:
- from 75% to 98% by weight of at least one hydrophilic thermoplastic elastomer (TPE) polymer A, chosen from (a1) copolymers containing polyester blocks and polyether blocks, (a2) copolymers containing polyurethane blocks and polyether or polyester blocks and/or mixtures thereof, relative to the weight of the composition;
- from 2% to 15% by weight of at least one copolymer B comprising units derived from ethylene, from an alkyl (meth)acrylate and from a comonomer including at least one acid, anhydride or epoxide function, relative to the weight of the composition; and
- from 0% to 10% by weight of at least one additive, relative to the weight of the composition.

2. Film according to Claim 1, in which the alkyl (meth)acrylate includes an alkyl group comprising from 1 to 24 carbon atoms, and preferably from 1 to 5 carbon atoms.

3. Film according to either of Claims 1 and 2, in which the alkyl (meth)acrylate is chosen from methyl (meth)acrylate, ethyl (meth)acrylate, and butyl (meth)acrylate and also combinations thereof.

4. Film according to one of Claims 1 to 3, in which the molar content of units derived from alkyl (meth)acrylate in copolymer B is from 5% to 35%.

5. Film according to one of Claims 1 to 4, in which the molar content of comonomer including at least one acid, anhydride or epoxide function in copolymer B is from 0.1% to 15%.

6. Film according to one of Claims 1 to 5, in which the comonomer including at least one acid, anhydride or epoxide function is chosen from unsaturated carboxylic acid anhydrides, and preferably is maleic anhydride.

7. Film according to one of Claims 1 to 5, in which the comonomer including at least one acid, anhydride or epoxide function has an unsaturated epoxide function, and preferably is glycidyl methacrylate.

8. Film according to one of Claims 1 to 7, in which copolymer B is free of units derived from vinyl acetate.

9. Film according to one of Claims 1 to 8, in which the additive is chosen from inert dyes such as titanium dioxide, fillers, surfactants, crosslinking agents, nucleating agents, reactive compounds, mineral or organic flame retardants, ultraviolet (UV) or infrared (IR) light absorbers, UV or IR fluorescent agents, and also combinations thereof.

10. Process for manufacturing a film, preferably a waterproof-breathable film, comprising the extrusion of the composition according to one of Claims 1 to 9.

11. Process according to Claim 10, in which the extrusion is performed at a temperature of from 100 to 300°C.

12. Process according to either of Claims 10 and 11, in which the extrusion is extrusion coating or extrusion casting.

13. Film obtained via the process according to one of Claims 10 to 12.

14. Film according to Claim 13, having a thickness of from 2 to 100 µm and preferably from 10 to 50 µm.

15. Use of a film according to Claim 14, in the medical, hygiene, luggage, manufacturing, clothing, domestic or household equipment, furnishing, carpet, automotive, industry, notably industrial filtration, agriculture and/or construction sectors.
